# EUROPÄISCHE PATENTSCHRIFT

(11) **EP 2 098 424 B1**
(45) Veröffentlichungstag und Bekanntmachung des Hinweises auf die Patenterteilung: **08.05.2019**
(21) Anmeldenummer: 09003171.7
(22) Anmeldetag: 05.03.2009
(51) Int. Cl.: B60T 8/18, B60T 13/68, B60T 13/66, B60T 8/32, B60T 8/36, B60T 8/88

(54) **Elektropneumatische Bremseinrichtung mit lastkorrigierter Bremsdruckregelung**
Electropneumatic braking device with load-corrected brake pressure regulation
Dispositif de freinage électropneumatique doté d'un réglage de la pression de freinage à correction de charge

(30) Priorität: 05.03.2008 DE 102008012700
(43) Veröffentlichungstag der Anmeldung: 09.09.2009
(73) Patentinhaber: KNORR-BREMSE Systeme für Schienenfahrzeuge GmbH, 80809 München (DE)
(72) Erfinder: Englbrecht, Matthaeus, 81673 München (DE); Knoss, Rainer, 80797 München (DE); Herden, Marc-Oliver, 81476 München (DE)
(74) Vertreter: Schönmann, Kurt

(56) Entgegenhaltungen:
- DE-A1- 3 432 782
- US-A- 4 364 609
- US-A- 6 095 621

## Beschreibung

Die vorliegende Erfindung betrifft eine elektropneumatische Bremseinrichtung für ein Fahrzeug, insbesondere für ein Schienenfahrzeug, mit lastkorrigierter Bremsdruckregelung, bei welcher ein elektropneumatischer Bremsdruckregler einen dem Fahrzeuggewicht angepassten Vorsteuerdruck für ein nachgeschaltetes Relaisventil zur Beaufschlagung eines pneumatischen Bremszylinders liefert, mit welchem ein Vorsteuer-Druckspeicher befüllbar ist.

Das Einsatzgebiet der vorliegenden Erfindung erstreckt sich auf Bremseinrichtungen, bei welchen über einen Vorsteuerkreis elektropneumatisch ein Bremsdruck geregelt wird. Dieser Bremsdruck wird anschließend durch ein Relaisventil volumenverstärkt und gelangt so zum Bremszylinder. Der Bremszylinder liefert die Bremskraft zum Anlegen von Bremsklötzen an eine Bremsscheibe oder -trommel.

Insbesondere bei Schienenfahrzeugen für den Personenbeförderungsverkehr kann sich das Transportgewicht je nach zu befördernder Personenanzahl stark ändern. Aus Sicherheitsgründen besteht daher das Bedürfnis, den Bremsdruck dem variablen Fahrzeuggewicht anzupassen.

Im allgemeinen Stand der Technik ist bekannt, dieses Problem dadurch zu lösen, indem der den Wagenkasten tragende Federbalkendruck eines Schienenfahrzeuges per Drucksensor gemessen wird und der geregelte Bremsdruck anhand einer hierauf Bezug nehmenden definierten Kennlinie angepasst wird. Problematisch hierbei ist, dass im Falle des Ausfalls der elektronischen Steuerung, beispielsweise in Folge Stromausfall, auch diese elektropneumatische Regelung ausfällt. Für diesen Fall ist gewöhnlich in den Bremseinrichtungen ein Notbremsventil vorgesehen, welches einen Notbremsdruck für die Bremszylinder zur Verfügung stellt. Der Notbremsdruck muss dabei durch zusätzliche pneumatische Ventile nach Möglichkeit an das Fahrzeuggewicht angepasst werden.

Aus der DE 34 32 782 A1 geht eine derartige elektropneumatische Bremseinrichtung hervor. Mittels Steuervorrichtung wird ausgehend von einem elektrischen Bremsanforderungssignal der erforderliche Bremsdruck bestimmt. Die Steuereinrichtung weist weiterhin eine in Notzuständen, insbesondere bei Stromausfall, wirksame Notbremseinrichtung auf. Die Einrichtung umfasst weiterhin eine von einem der Fahrzeugbelastung entsprechenden Fahrzeuglastsignal gesteuerte Begrenzungsvorrichtung zum fahrzeuglastabhängigen Begrenzen der Bremskraft. Das Fahrzeuglastsignal wird einem Signalwertumsetzer zugeführt, der den elektrischen Signalwert in einen mechanischen, die Begrenzungsvorrichtung ggf. unmittelbar steuernden mechanischen Stellwert umsetzt. Der Signalwertumsetzer ist so ausgeführt, dass bei Ausfall seiner elektrischen Ansteuerung der im Ausfallzeitpunkt anstehende mechanische Signalwert in etwa konstant aufrechterhalten wird. Hierüber lässt sich eine in etwa fahrzeuglastabhängige Notbremsung durchführen, so dass im Notfall Überbremsungen des Fahrzeugs vermieden werden.

Die EP 0 438 678 A1 offenbart eine elektropneumatische Bremseinrichtung mit einem elektropneumatischen Bremsdruckregler zum Umsetzen eines elektrischen Bremsanforderungssignals in einen Bremsdruck. Durch ein Notbremsventil wird im Normalfall dieser Bremsdruck und in Notzuständen ein durch ein Begrenzungsventil fahrzeuglastabhängig begrenzter Notbremsdruck einem Bremszylinder zugeführt. Zur fahrzeuglastabhängigen Begrenzung des Notbremsdrucks ist ein zweiter Bremsdruckregler vorgesehen, welcher aus einem fahrzeuglastabhängigen, elektrischen Signal einen fahrzeuglastabhängigen Druckmitteldruck erstellt, welcher in einem Druckmittelspeicher gespeichert und dem Begrenzungsventil zu dessen Steuerung zugeführt wird. Der zweite Bremsdruckregler ist im stromlosen Zustand geschlossen, bei Stromausfall bleibt daher der fahrzeuglastabhängige Druckmitteldruck erhalten und das Begrenzungsventil vermag somit den Notbremsdruck weiterhin fahrzeuglastabhängig zu begrenzen. In einer weiteren, durch ein Umschaltventil ergänzten Ausführungsform kann nur ein Relaisventil vorgesehen sein, welches der Erstellung sowohl des Bremsdrucks als auch des fahrzeuglastabhängigen Druckmitteldrucks dient.

Eine Notbremsvorrichtung lässt sich nach dem allgemein bekannten Stand der Technik in verschiedener Weise umsetzen. Zum Einen kann diese Zusatzfunktion im Relaisventil integriert werden, indem das Übersetzungsverhältnis des Relaisventils entsprechend dem Fahrzeuggewicht angepasst wird. Dabei wird der Notbrems-Vorsteuerdruck durch ein zusätzliches lastabhängiges Druckminderventil angepasst. Eine weitere Möglichkeit besteht darin, dass von einem zusätzlichen elektropneumatischen Regler ein vom Fahrzeuggewicht abhängiger Druck geregelt und in einem Volumen gespeichert wird, der dann bei Ausfall der elektropneumatischen Regelung zur Anpassung des Bremsdrucks verwendet wird. All diese Maßnahmen erfordern jedoch einen entsprechenden gerätetechnischen Aufwand, insbesondere an zusätzlicher Ventiltechnik.

Es ist daher die Aufgabe der vorliegenden Erfindung, eine elektropneumatische Bremseinrichtung mit lastabhängiger Notbremsfunktion zu schaffen, zu deren gerätetechnischer Umsetzung ein minimaler Aufwand erforderlich ist.

Die Aufgabe wird ausgehend von einer elektropneumatischen Bremseinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der Bremsdruckregler während des normalen Fahrbetriebes in einem zusätzlichen Notbrems-Druckspeicher einen lastkorrigierten Notbrems-Vorsteuerdruck ausregelt, welcher im Falle einer Notbremsung zum Vorsteuern des Relaisventils zum Einsatz kommt.

Mit anderen Worten wird mit Hilfe des für den normalen Bremsbetriebs verwendeten Bremsdruckreglers auch ein Notbrems-Vorsteuerdruck geregelt, der in einem zusätzlichen Volumen gespeichert wird. Dieser dem Fahrzeuggewicht angepasste Vorsteuerdruck wird im Falle der Notbremsung zum Vorsteuern des Relaisventils verwendet.

Der Vorteil der erfindungsgemäßen Lösung liegt darin, dass auf zusätzlichen gerätetechnischen Aufwand, wie ein lastabhängiges Druckminderventil oder auf Zusatzfunktionen - wie Lastkorrekturvorrichtung im Relaisventil - verzichtet werden kann. Stattdessen wird lediglich ein zusätzliches, wesentlich einfacheres Magnetventil benötigt. Der vorhandene Bremsdruckregler regelt nämlich im normalen Bremsbetrieb den Bremsdruck und im Fahrbetrieb, wenn also nicht gebremst wird, den lastkorrigierten Notbrems-Vorsteuerdruck aus und erfüllt insoweit eine Doppelfunktion.

Gemäß einer die Erfindung verbessernden Maßnahme lässt sich die Bremsaufbauzeit verringern, indem beim Umschalten auf die normale Betriebsbremsfunktion direkt über ein separates Umschaltventil Luft aus dem Vorsteuervolumen des Druckreglers auf das Relaisventil geleitet werden kann. Demgegenüber ist während des normalen Fahrbetriebs das Vorsteuervolumen drucklos, so dass beim Bremsen dieses Volumen erst gefüllt werden muss, was eine längere Bremsaufbauzeit verursacht.

Vorzugsweise ist zum Notbremsen ein zusätzliches Magnetventil vorgesehen, welches mit dem lastkorrigierten Notbrems-Vorsteuerdruck ein zwischen dem Notbrems-Druckspeicher und dem Relaisventil angeordnetes Notbremsventil ist.

Vorzugsweise umfasst der elektropneumatische Bremsdruckregler ein Regelventil zum Befüllen und ein Regelventil zum Entlüften einer Vorsteuerdruckleitung, welche zum Relaisventil geführt ist, wobei die Ansteuerung nach Maßgabe einer elektronischen Regelung erfolgt. Zur Erhöhung des Vorsteuerdrucks bei zu geringem Ist-Vorsteuerdruck wird dementsprechend das Regelventil zum Befüllen betätigt, wogegen zur Senkung des Vorsteuerdrucks bei zu hohem Ist-Vorsteuerdruck das Regelventil zum Entlüften der Vorsteuerdruckleitung aktiviert wird. Hierdurch wird in dem zugeordneten Vorsteuer-Druckspeicher ein lastkorrigierter Vorsteuerdruck erzeugt. Der dagegen im Notbrems-Druckspeicher bevorratete Notbrems-Vorsteuerdruck wird über das Notbremsventil direkt an das Relaisventil geleitet. Das System ist dabei so ausgelegt, dass nach Aktivierung der Druck auf den lastkorrigierten Notbrems-Vorsteuerdruck absinkt.

Gemäß einer, die Erfindung verbessernden Maßnahme ist vorgesehen, dass ein nach Art eines einfachen Magnetventils ausgeführtes Umschaltventil während des normalen Fahrbetriebs einerseits die Vorsteuerdruckleitung mit dem Notbrems-Druckspeicher verbindet, und während des Bremsbetriebes andererseits die Vorsteuerdruckleitung vom Notbrems-Druckspeicher absperrt. Somit wird über dieses Umschaltventil das Volumen im Notbrems-Druckspeicher isoliert. Während des normalen Fahrbetriebes ist der Druck in den beiden Druckspeichern etwas größer als erforderlich, um bei Notbremsung den hierdurch entstehenden Druckabfall in Folge Volumenvergrößerung durch Zuschalten des Relais auszugleichen.

Gemäß einer anderen, die Erfindung verbessernden Maßnahme wird vorgeschlagen, dass zum Lösen der Bremse der Vorsteuerdruck des Relaisventils über das benachbarte Notbremsventil, das nachfolgende Umschaltventil und schließlich das Regelventil zum Entlüften am elektropneumatischen Bremsdruckregler an die Umgebung entweicht. Hierdurch muss kein separates Entlüftungsventil am Relaisventil vorgesehen werden. Nachdem sich der Vorsteuerdruck nach Lösen der Bremse abgebaut hat, wird über das Umschaltventil der Druckregler wieder mit dem Notbrems-Vorsteuerdruck beaufschlagt, um den Druck hierin wiederauszuregeln.

Als zusätzliche Maßnahme wird vorgeschlagen, nach einem Abzweig der Vorsteuerdruckleitung zum Notbremsdruckspeicher hin ein zusätzliches Sperrventil einzufügen, welches während der Entlüftung des Vorsteuerdrucks zum Lösen der Bremse geschlossen ist. Dieses zusätzliche Sperrventil ermöglicht es, dass gleichzeitig der Notbrems-Vorsteuerdruck geregelt und das Relaisventil entlüftet werden kann. Der Vorteil dabei ist, dass im normalen Fahrbetrieb die Bremse sicher entlüftet wird, auch wenn es aufgrund von Fehlern zu Undichtigkeiten in Ventilen kommen sollte. Somit stellt diese Maßnahme eine weitere Sicherheitsfunktion bereit.

Ferner wird als zusätzliche Maßnahme vorgeschlagen, dass zur Einstellung eines minimalen Notbremsvorsteuerdrucks am Notbremsdruckspeicher ein Druckminderventil mit Rückschlagventil angeschlossen ist. Dabei kann die Rückschlagventilfunktion direkt in das Druckminderventil integriert sein. Der Vorteil dieser Maßnahme besteht darin, dass bei Ausfall der elektronischen Druckregelung im Fehlerfall zumindest eine, wenn auch weniger leistungsfähige, Notbremsung möglich ist.

Eine andere optionale Maßnahme besteht darin, zur Einstellung eines maximalen Vorsteuerdrucks unmittelbar vor dem Relaisventil in der Vorsteuerdruckleitung ein Druckminderventil mit Rückströmung anzuordnen. Auch hierbei kann die Rückströmfunktion direkt in ein Druckminderventil integriert werden. Hiermit kann erreicht werden, dass der Bremszylinderdruck bei einer Fehlfunktion der elektronischen Druckregelung auf einen maximalen Wert beschränkt bleibt.

Zur Überwachungszwecken der vorstehend beschriebenen Vorsteuerung kann es von Vorteil sein, einen Drucksensor direkt in die Bremsdruckleitung zwischen Relaisventil und Bremszylinder einzufügen. Alternativ hierzu ist es auch möglich, einen solchen Drucksensor arbeitsdruckseitig direkt im Relaisventil zu integrieren. Mit Hilfe des Drucksensors lässt sich der anliegende Bremszylinderdruck stets überwachen und an das vorstehend beschriebene erfindungsgemäße System rückmelden, um Fehlfunktionen der gesamten Druckregelung erkennen zu können. Hierdurch könnte bei der erfindungsgemäßen Bremseinrichtung eine auf Undichtigkeiten beruhende schleichende Druckerhöhung im Vorsteuerkreis des Relaisventils erkannt werden, um aktiv ein Lösen der Brems über entsprechende Ansteuerung der Ventiltechnik zu bewirken, falls ein definierter maximal zulässiger Wert erreicht wird. Insoweit stellt diese Maßnahme eine weitere Sicherheitsfunktion dar.

Weitere, die Erfindung verbessernde Maßnahmen werden nachstehend gemeinsam mit der Beschreibung zweier bevorzugter Ausführungsformen anhand der Figuren näher dargestellt. Es zeigt:
- Fig.1: eine schematische Darstellung einer ersten Ausführungsform einer elektropneumatischen Bremseinrichtung in Fahrstellung;
- Fig.2: eine schematische Darstellung der ersten Ausführungsform einer elektropneumatischen Bremseinrichtung in Bremsstellung;
- Fig.3: eine schematische Darstellung der ersten Ausführungsform einer elektropneumatischen Bremseinrichtung in Notbremsstellung;
- Fig.4: eine schematische Darstellung einer zweiten Ausführungsform einer elektropneumatischen Bremseinrichtung in Fahrstellung;
- Fig.5: eine schematische Darstellung der zweiten Ausführungsform einer elektropneumatischen Bremseinrichtung in Bremsstellung, und
- Fig.6: eine schematische Darstellung der zweiten Ausführungsform einer elektropneumatischen Bremseinrichtung in Notbremsstellung.

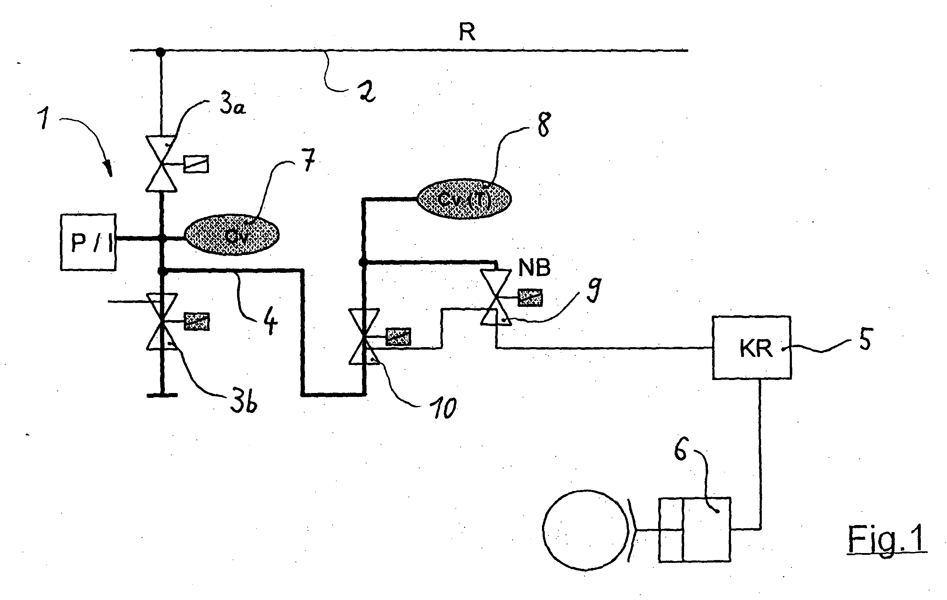

Gemäß Fig.1 wird ein elektropneumatischer Bremsdruckregler 1 von einer Vorratsluftleitung 2 gespeist. Der elektropneumatische Bremsdruckregler 1 besteht hier aus einem mit der Vorratsluftleitung 2 verbundenen Regelventil 3a zum Befüllen einer Vorsteuerdruckleitung 4; zum Entlüften der Vorsteuerdruckleitung 4 ist ein weiteres Regelventil 3b vorgesehen. Die so gepaarten Regelventile 3a und 3b werden nach Maßgabe einer - nicht weiter dargestellten - Regelelektronik elektrisch angesteuert. Die Regelung berücksichtigt hierbei das Fahrzeuggewicht, um bei geringem Fahrzeuggewicht einen entsprechend angepassten geringeren Vorsteuerdruck zu liefern, so dass ein Überbremsen des Fahrzeuges in dieser Situation verhindert wird.

Die Vorsteuerdruckleitung 4, welche den lastkorrigierten Vorsteuerdruck liefert, ist mit der Vorsteuerung eines nachgeschalteten Relaisventils 5 verbunden. Das Relaisventil 5 beaufschlagt arbeitsdruckseitig einen pneumatischen Bremszylinder 6 zum Bremsen. Um beim Auslösen der Fahrtbremse eine ungewollte Druckabsenkung zu verhindern, steht die vorstehend beschriebene Vorsteuerung mit einem Vorsteuer-Druckspeicher 7 in Verbindung, welcher das Vorsteuerdruck-Volumen bevorratet.

Für eine Notbremsung ist die Vorsteuerdruckleitung 4 mit einem zusätzlichen Notbrems-Druckspeicher 8 durch Betätigung eines Notbremsventils 9 verbindbar. Der Notbremsdruckspeicher 8 wird während des normalen Fahrbetriebes, in welchem die Bremseinrichtung nicht aktiviert wird, mit einem lastkorrigierten Notbrems-Vorsteuerdruck durch den Bremsdruckregler 1 befüllt. Somit wird sichergestellt, dass im Falle einer Notbremsung ein lastkorrigierter Notbrems-Vorsteuerdruck zur Verfügung steht, der im Falle der Notbremsung zum Vorsteuern des Relaisventils 8 um Einsatz kommt.

Ein an einem Abzweig der Vorsteuerdruckleitung 4 angeordnetes Umschaltventil 10 verbindet während des normalen Fahrbetriebes die Vorsteuerdruckleitung 4 mit dem Notbrems-Druckzylinder 8. Während des Bremsbetriebes erfolgt jedoch eine Umschaltung, so dass der Notbremsdruckspeicher 8 isoliert wird. Somit kann hieraus der Notbremsvorsteuerdruck während der Bremsung nicht entweichen. Genutzt wird der Vorsteuerdruck aus dem anderen Vorsteuer-Druckspeicher 7.

Veranschaulicht ist hier (fette Linie) die Verbindungssituation während des normalen Fahrtbetriebes bei gelöster Bremse.

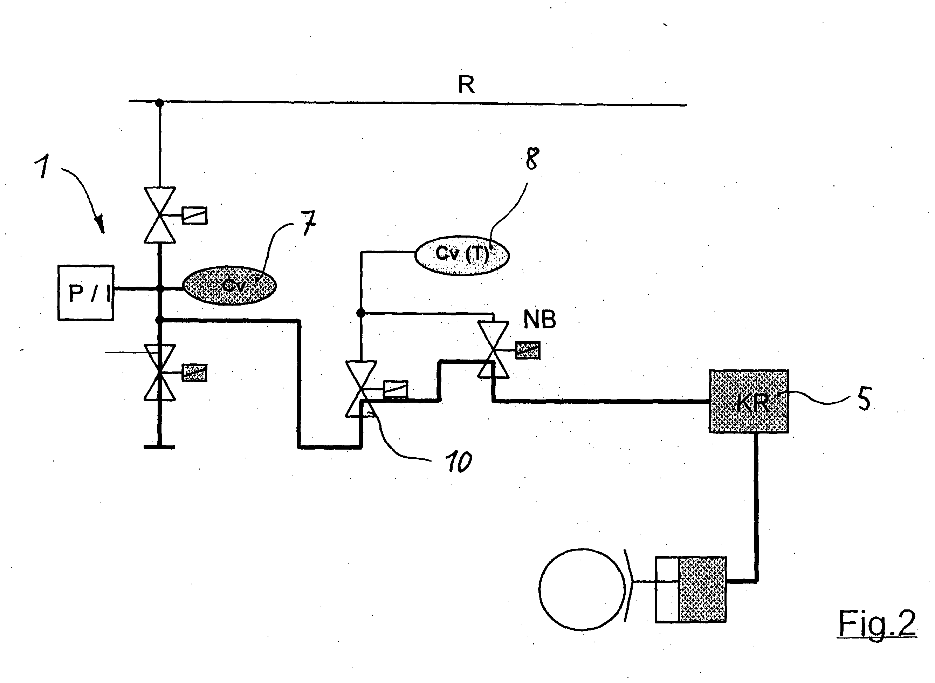

In Fig.2 ist die Verbindungssituation bei normaler Bremsung verdeutlicht. Hierbei wird über das Umschaltventil 10 der im Notbrems-Druckspeicher 8 enthaltenen Notbrems-Vorsteuerdruck isoliert. Der Vorsteuerdruck gelangt vom Bremsdruckregler 1 aus dem Druckspeicher 7 zum Relaisventil 5.

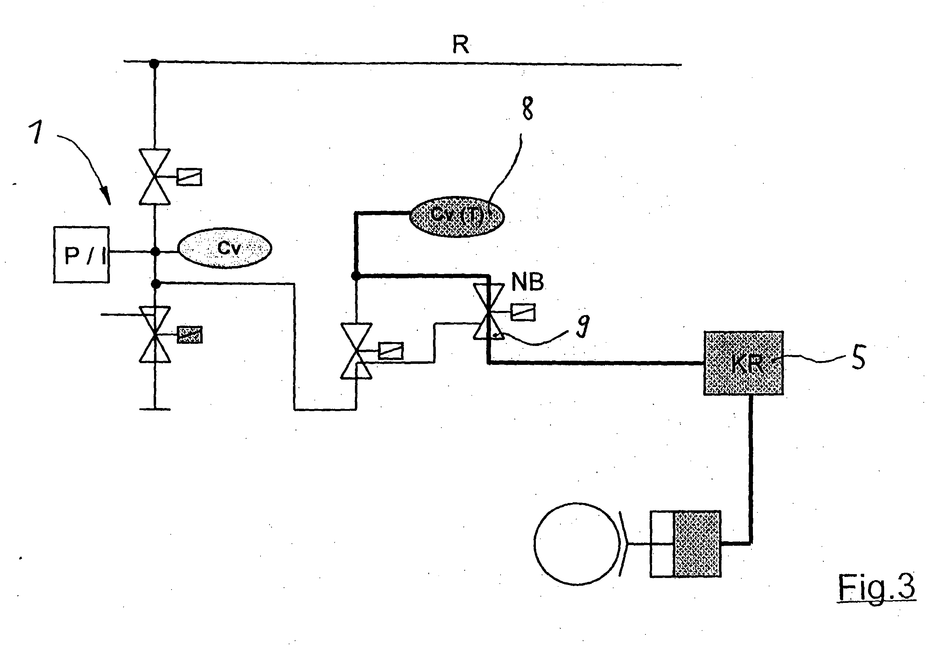

In Fig.3 ist die Verbindungssituation während einer Notbremsung veranschaulicht. Die im Notbrems-Druckspeicher 8 gespeicherte Druckluft, welche dem aktuell lastkorrigierten Vorsteuerdruck entspricht, wird über das betätigte Notbremsventil 9 auf die Vorsteuerung des Relaisventils 5 gegeben. Dabei sinkt der Druck auf den lastkorrigierten Notbrems-Vorsteuerdruck.

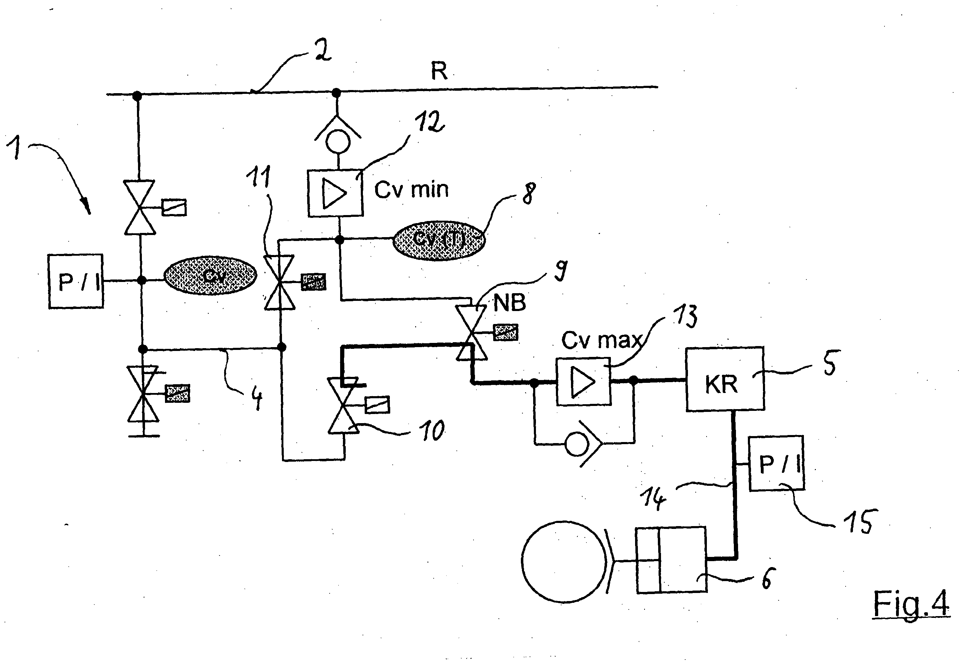

Gemäß der in Fig.4 dargestellten anderen Ausführungsform ist in einem Abzweig der Vorsteuerdruckleitung 4 zum Notbrems-Druckspeicher 8 ein zusätzliches Sperrventil 11 vorgesehen, welches während der Entlüftung des Vorsteuerdrucks zum Lösen der Brems geschlossen ist. Veranschaulicht ist hier die Verbindungssituation bei gelöster Bremse. Zur Einstellung eines minimalen Notbrems-Vorsteuerdrucks am Notbrems-Druckspeicher 8 ist weiterhin ein Druckminderventil 12 mit Rückschlagventil an die Vorratsleitung 2 angeschlossen. Zum Einstellen eines maximalen Vorsteuerdrucks ist unmittelbar vor dem Relaisventil 5 die Steuerdruckleitung 4 ein Druckminderventil 13 mit Rückströmung angeordnet. Hiermit wird erreicht, dass der Druck im Bremszylinder 6 bei einer Fehlfunktion der elektronischen Druckregelung auf einen maximalen Wert beschränkt bleibt. Um selbst bei hoher Beladung einem Überbremsen entgegenzuwirken. Ferner ist in die zwischen dem Relaisventil 5 und dem Bremszylinder 6 vorgesehene Bremsdruckleitung 14 ein Drucksensor 15 angeordnet. Der Drucksensor 15 dient an dieser Stelle der Ermittlung des aktuellen Bremsdrucks, um Rückschlüsse auf eine auf Undichtigkeiten beruhende schleichende Druckerhöhung im Vorsteuerkreis des Relaisventils 5 erkennen zu können, so dass bei Erreichen eines maximal zulässigen Werts aktiv die Bremse im Sinne einer Sicherheitsmaßnahme gelöst werden kann.

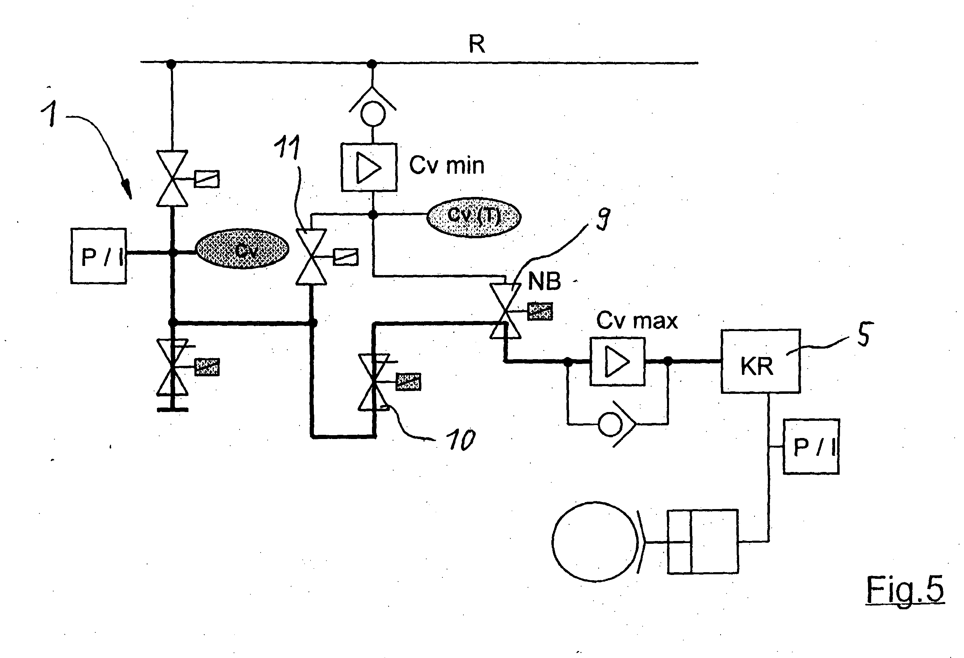

Die Fig.5 veranschaulicht die Verbindungssituation bei der elektropneumatischen Bremseinrichtung der vorstehend beschriebenen Ausführungsform während einer normalen Betriebsbremsung. Ausgehend vom Bremsdruckregler 1 gelangt der lastkorrigierte Vorsteuerdruck der Vorsteuerdruckleitung 4 bei gesperrtem Sperrventil 11 und geöffnetem Umschaltventil 10 sowie geschlossenem Notbremsventil 9 zur Vorsteuerung des Relaisventils 8.

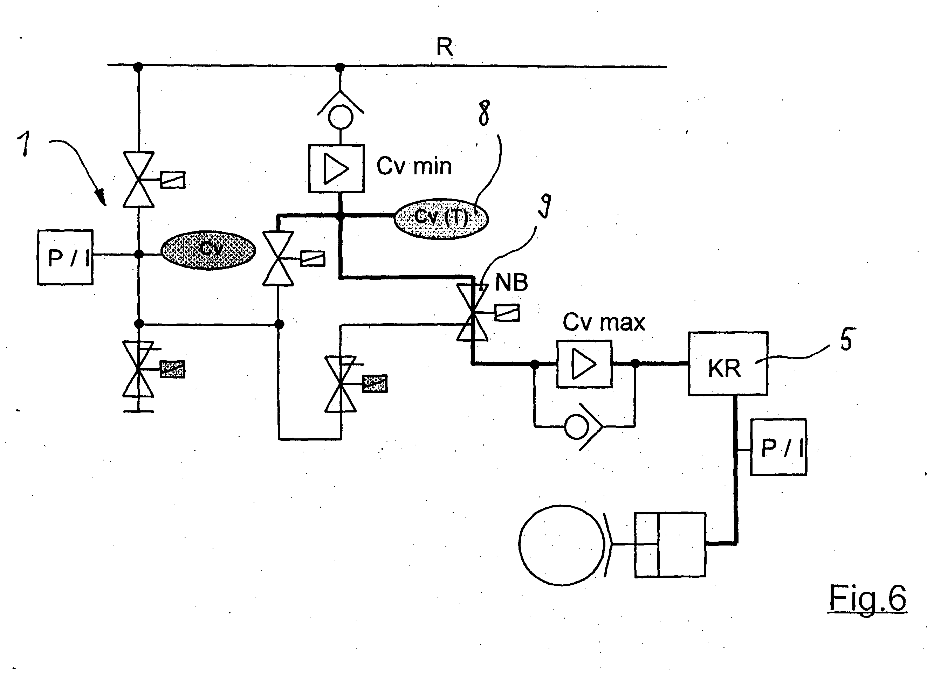

Schließlich stellt Fig.6 die Verbindungssituation während einer Notbremsung bei dieser Ausführungsform dar, wobei bei geöffnetem Notbremsventil 9 der lastkorrigierte Notbremsvorsteuerdruck aus dem Notbrems-Druckspeicher 8 an das Relaisventil 5 geführt ist.

### Bezugszeichenliste

**1** Bremsdruckzylinder
**2** Vorratsluftleitung
**3** Reglerventil
**4** Vorsteuerdruckleitung
**5** Relaisventil
**6** Bremszylinder
**7** Druckspeicher
**8** Notbrems-Druckspeicher
**9** Notbremsventil
**10** Umschaltventil
**11** Sperrventil
**12** Druckminderventil
**13** Druckminderventil
**14** Bremsdruckleitung
**15** Drucksensor

## Patentansprüche

1. Elektropneumatische Bremseinrichtung für ein Fahrzeug mit lastkorrigierter Bremsdruckregelung, bei welcher ein elektropneumatischer Bremsdruckregler (1) einen dem Fahrzeuggewicht angepassten Vorsteuerdruck für ein nachgeschaltetes Relaisventil (5) zur Beaufschlagung eines pneumatischen Bremszylinders (6) liefert, mit welchem ein Vorsteuer-Druckspeicher (7) befüllbar ist,
**dadurch gekennzeichnet, dass** der Bremsdruckregler (1) während des normalen Fahrbetriebes in einem zusätzlichen Notbrems-Druckspeicher (8) einen lastkorrigierten Notbrems-Vorsteuerdruck ausregelt, welcher im Falle einer Notbremsung zum Vorsteuern des Relaisventils (8) zum Einsatz kommt.

2. Elektropneumatische Bremseinrichtung nach Anspruch 1,
**dadurch gekennzeichnet, dass** zum Notbremsen mit dem lastkorrigierten Notbrems-Vorsteuerdruck ein zwischen dem Notbrems-Druckspeicher (8) und dem Relaisventil (5) angeordnetes Notbremsventil (9) vorgesehen ist.

3. Elektropneumatische Bremseinrichtung nach Anspruch 1,
**dadurch gekennzeichnet, dass** der elektropneumatische Bremsdruckregler (1) ein Reglerventil (3a) zum Befüllen und ein Reglerventil (3b) zum Entlüften einer Vorsteuerdruckleitung (4) umfasst, die nach Maßgabe der Regelung elektrisch ansteuerbar sind.

4. Elektropneumatische Bremseinrichtung nach Anspruch 3,
**dadurch gekennzeichnet, dass** ein Umschaltventil (10) während des Fahrbetriebes einerseits die Vorsteuerdruckleitung (4) mit dem Notbrems-Druckspeicher (8) verbindet und während des Bremsbetriebes andererseits die Vorsteuerdruckleitung (4) vom Notbrems-Druckspeicher (8) absperrt.

5. Elektropneumatische Bremseinrichtung nach Anspruch 4,
**dadurch gekennzeichnet, dass** zum Lösen der Bremse der Vorsteuerdruck des Relaisventils (5) über das benachbarte Notbremsventil (9), das nachfolgende Umschaltventil (10) und schließlich das Reglerventil (3b) zum Entlüften am elektropneumatischen Bremsdruckregler an die Umgebung entweicht.

6. Elektropneumatische Bremseinrichtung nach Anspruch 5,
**dadurch gekennzeichnet, dass** nach einem Abzweig der Vorsteuerdruckleitung (4) zum Notbrems-Druckspeicher (8) ein zusätzliches Sperrventil (11) vorgesehen ist, das während der Entlüftung des Vorsteuerdrucks zum Lösen der Bremse geschlossen ist.

7. Elektropneumatische Bremseinrichtung nach Anspruch 1,
**dadurch gekennzeichnet, dass** zur Einstellung eines minimalen Notbrems-Vorsteuerdrucks am Notbrems-Druckspeicher (8) ein Druckminderventil (12) mit Rückschlagventil angeschlossen ist.

8. Elektropneumatische Bremseinrichtung nach Anspruch 3,
**dadurch gekennzeichnet, dass** zur Einstellung eines maximalen Vorsteuerdrucks unmittelbar vor dem Relaisventil (5) in der Vorsteuerdruckleitung (4) ein Druckminderventil (13) mit Rückströmung angeordnet ist.

9. Elektropneumatische Bremseinrichtung nach Anspruch 1,
**dadurch gekennzeichnet, dass** in der Bremsdruckleitung (14) zwischen Relaisventil (5) und Bremszylinder (6) ein Drucksensor (15) zur Ermittlung des aktuellen Bremsdrucks angeordnet ist.

10. Schienenfahrzeug, umfassend eine elektropneumatische Bremseinrichtung nach einem der vorstehenden Ansprüche.

## Claims

1. Electropneumatic braking device for a vehicle, with load-corrected brake pressure regulation, wherein an electropneumatic brake pressure regulator (1) provides a pilot pressure matched to the vehicle weight for a downstream relay valve (5) for application to a pneumatic brake cylinder (6), with which pilot pressure a pilot pressure accumulator (7) can be filled,
**characterised in that** in the normal driving mode the brake pressure regulator (1) corrects in an additional emergency brake pressure accumulator (8) a load-corrected pilot pressure which is used for the pilot control of the relay valve (5) in the case of an emergency braking operation.

2. Electropneumatic braking device according to claim 1,
**characterised in that** an emergency brake valve (9) is provided between the emergency brake pressure accumulator (8) and the relay valve (5) for emergency braking with the load-corrected emergency braking pilot pressure.

3. Electropneumatic braking device according to claim 1,
**characterised in that** the electropneumatic brake pressure regulator (1) comprises a regulator valve (3a) for filling and a regulator valve (3b) for venting a pilot pressure line (4), which are electrically selectable in accordance with the regulation.

4. Electropneumatic braking device according to claim 3,
**characterised in that** a changeover valve (10) connects the pilot pressure line (4) to the emergency brake pressure accumulator (8) in the driving mode on the one hand and shuts off the pilot pressure line (4) from the emergency brake pressure accumulator (8) in the braking mode on the other hand.

5. Electropneumatic braking device according to claim 4,
**characterised in that** for releasing the brake the pilot pressure of the relay valve (5) escapes to the environment via the adjacent emergency brake valve (9), the downstream changeover valve (10) and finally the regulator valve (3b) for venting at the electropneumatic brake pressure regulator.

6. Electropneumatic braking device according to claim 5,
**characterised in that** downstream of a branch-off of the pilot pressure line (4) to the emergency brake pressure accumulator (8) there is provided an additional check valve (11), which is closed during the venting of the pilot pressure for releasing the brake.

7. Electropneumatic braking device according to claim 1,
**characterised in that** a pressure reducing valve (12) with non-return valve is connected to the emergency brake pressure accumulator (8) for setting a minimum emergency braking pilot pressure.

8. Electropneumatic braking device according to claim 3,
**characterised in that** a pressure reducing valve (13) with return flow is located immediately upstream of the relay valve (5) in the pilot pressure line (4) for setting a maximum pilot pressure.

9. Electropneumatic braking device according to claim 1,
**characterised in that** a pressure sensor (15) is located in the brake pressure line (14) between the relay valve (5) and the brake cylinder (6) for detecting the current brake pressure.

10. Rail vehicle comprising an electropneumatic braking device according to any of the preceding claims.

## Revendications

1. Dispositif électropneumatique de frein d'un véhicule à régulation de la pression de freinage corrigée en charge, dans lequel un régleur (1) électropneumatique de la pression de freinage fournit une pression pilote, adaptée au poids du véhicule, pour une vanne (5) relais en aval d'alimentation d'un cylindre (6) de frein pneumatique, régleur par lequel un accumulateur (7) de pression pilote peut être rempli, **caractérisé en ce que** le régleur (1) de la pression de freinage règle, pendant le fonctionnement normal en marche, une pression pilote de frein d'urgence corrigée en charge dans un accumulateur (8) de pression d'urgence supplémentaire, laquelle est utilisée dans le cas d'un freinage d'urgence pour piloter la vanne (8) relais.

2. Dispositif électropneumatique de frein suivant la revendication 1,
**caractérisé en ce que**, pour le freinage d'urgence par la pression pilote de frein d'urgence corrigée en charge, il est prévu une soupape (9) de frein d'urgence, montée entre l'accumulateur (8) de pression de frein d'urgence et la vanne (5) relais.

3. Dispositif électropneumatique de frein suivant la revendication 1,
**caractérisé en ce que** le régleur (1) électropneumatique de pression de freinage comprend une soupape (3a) de régleur pour le remplissage et une soupape (3b) de régleur pour la purge d'un conduit (4) de pression de commande, qui peuvent être commandées électriquement en fonction de la régulation.

4. Dispositif électropneumatique de frein suivant la revendication 3,
**caractérisé en ce qu'**une soupape (10) de commutation relie, pendant le fonctionnement en marche, d'une part le conduit (4) de la pression pilote à l'accumulateur (8) de pression de freinage d'urgence et, pendant le fonctionnement du frein, d'autre part, sépare le conduit (4) de la pression pilote de l'accumulateur (8) de pression de frein d'urgence.

5. Dispositif électropneumatique de frein suivant la revendication 4,
**caractérisé en ce que**, pour desserrer le frein, la pression pilote de la vanne (5) relais se dégage à l'atmosphère par la soupape (9) voisine de frein d'urgence, par la soupape (10) de commutation venant ensuite et enfin par la soupape (3b) du régleur, pour la mise à l'atmosphère du régleur électropneumatique de la pression de freinage.

6. Dispositif électropneumatique de frein suivant la revendication 5,
**caractérisé en ce qu'**après une bifurcation du conduit (4) de la pression pilote vers l'accumulateur (8) de la pression de frein d'urgence, est prévue une vanne (11) d'arrêt supplémentaire, qui est fermée pour desserrer le frein pendant la mise à l'atmosphère de la pression pilote.

7. Dispositif électropneumatique de frein suivant la revendication 1,
**caractérisé en ce que**, pour régler une pression pilote minimum du frein d'urgence, il est raccordé à l'accumulateur (8) de pression de frein d'urgence, un détendeur (12) à clapet antiretour.

8. Dispositif électropneumatique de frein suivant la revendication 3,
**caractérisé en ce que**, pour régler une pression pilote maximum, il est monté, directement avant la soupape (5) relais, dans le conduit (4) de la pression pilote, un détendeur (13) avec écoulement en retour.

9. Dispositif électropneumatique de frein suivant la revendication 1,
**caractérisé en ce que**, dans le conduit (14) de la pression de freinage, il est monté, entre la vanne (5) relais et le cylindre (6) de frein, un capteur (15) de pression, pour déterminer la pression de freinage instantanée.

10. Véhicule ferroviaire comprenant un dispositif électropneumatique de frein suivant l'une des revendications précédentes.
